# EUROPEAN PATENT APPLICATION

(11) **EP 3 720 091 A1**
(43) Date of publication of application: **07.10.2020**
(21) Application number: 18902113.2
(22) Date of filing: 25.12.2018
(51) Int. Cl.: H04L 29/08

(54) **SERVICE MANAGEMENT METHOD AND RELATED DEVICES**

(30) Priority: 26.01.2018 CN 201810081437
(71) Applicant: HUAWEI TECHNOLOGIES CO., LTD., Shenzhen, Guangdong 518129 (CN)
(72) Inventor: REN, Dewang, Xi'an, Shaanxi 710049 (CN); LU, Wei, Shenzhen, Guangdong 518129 (CN); GUI, Xiaolin, Xi'an, Shaanxi 710049 (CN); ZHANG, Kaiyuan, Xi'an, Shaanxi 710049 (CN)
(74) Representative: Pfenning, Meinig & Partner mbB
(86) International application number: PCT/CN2018/123459
(87) International publication number: WO 2019/144746

(57) **Abstract**

Embodiments of this application disclose a service management method and a related device. The method according to the embodiments of this application includes: receiving, by a mobile edge computing MEC management device, service description information and service execution information that are sent by an exposure function device and that are of a to-be-deployed service, where the service execution information includes information for executing the service description information; determining, by the MEC management device, a target MEC execution device; sending, by the MEC management device, the service description information and the service execution information to the target MEC execution device; receiving, by the MEC management device, an execution result that is sent by the target MEC execution device and that is of the service execution information, where the execution result is obtained by the target MEC execution device based on the service description information and the service execution information; obtaining, by the MEC management device, a service result of the to-be-deployed service based on the execution result; and sending, by the MEC management device, the service result to the exposure function device. The embodiments of this application further provide a management device and an exposure function device, to automatically deploy a third-party service.

## Description

This application claims priority to Chinese Patent Application No. 201810081437.0, filed with the Chinese Patent Office on January 26, 2018, and entitled "SERVICE MANAGEMENT METHOD AND RELATED DEVICE", which is incorporated herein by reference in its entirety.

### TECHNICAL FIELD

This application relates to the communications field, and in particular, to a service management method and a related device.

### BACKGROUND

According to a service deployment method in a distributed computing environment, a service is deployed on a cluster. The cluster includes various devices having a computing capability, and the devices in the cluster jointly execute the service. During service deployment, the cluster is usually selected based on the computing capability and network bandwidth of the device. For example, a device having a relatively high computing capability and a relatively high communication capability is selected to deploy the service. The current service deployment method is not applicable to a mobile edge computing environment.

### SUMMARY

Embodiments of this application provide a service management method and a related device, to automatically deploy a third-party service. In the embodiments of this application, an architecture is automatically deployed based on a service. The architecture includes an exposure function device, an MEC management device, an MEC execution device, and a terminal. The architecture is a hierarchical architecture, and enables a third-party server to quickly and automatically deploy the third-party service on a network edge device (MEC device). The third-party service includes but is not limited to a search and rescue service for a missing person, a real-time road condition query, and the like. A high-quality service is provided for a user by using the deployed service. In this way, resource utilization of the MEC device can be improved, and diversified service services can be provided for the user, thereby improving user experience.

According to a first aspect, an embodiment of this application provides a service management method, including:
receiving, by a mobile edge computing MEC management device, service description information and service execution information that are sent by an exposure function device and that are of a to-be-deployed service, where the service execution information includes information for executing the service description information, the service description information is used to specifically describe the to-be-deployed service, the service execution information includes at least one execution program and a service logical relationship, the execution program is used to execute a function corresponding to the service, the service logical relationship is a relationship between at least two execution programs when there are at least two execution programs, and the service logical relationship includes an independency relationship and a dependency relationship; determining, by the MEC management device, a target MEC execution device; then sending, by the MEC management device, the service description information and the service execution information to the target MEC execution device; receiving, by the MEC management device, an execution result that is sent by the target MEC execution device and that is of the service execution information, where the execution result is obtained by the target MEC execution device based on the service description information and the service execution information; obtaining, by the MEC management device, a service result of the to-be-deployed service based on the execution result; and sending, by the MEC management device, the service result to the exposure function device. In this embodiment of this application, because an MEC device has a feature including a computing, storage, and processing capability, a third-party server quickly and automatically deploys a third-party service on a network edge device (MEC device), to provide diversified service services for a user.

In a possible implementation, the description information further includes information about a geographical area of the to-be-deployed service. The MEC management device may determine the target MEC execution device based on a feature of the service execution information and the geographical area. In this embodiment of this application, because the MEC device may have a location area attribute, a service that is relatively sensitive to a geographical location can be deployed on a target execution device, and the method is suitable for a service that is sensitive to a geographical location in a mobile edge computing environment.

In a possible implementation, the determining, by the MEC management device, the MEC execution device based on a feature of the service execution information and the geographical area may specifically include: determining, by the MEC management device, an expected deployment location of the execution information based on the feature of the execution information; sending, by the MEC management device, the expected deployment location to the exposure function device, where the exposure function device is responsible for monitoring performance and statuses of all the MEC devices and stores location information of all the MEC devices, the expected deployment location is used to determine, by the exposure function device, a set of MEC execution devices, and a coverage area of the set of the MEC execution devices includes the geographical area; then receiving, by the MEC management device, the set of the MEC execution devices determined by the exposure function device; and selecting, by the MEC management device, the target MEC execution device from the set of the MEC execution devices.

In a possible implementation, a specific manner in which the MEC management device selects the target MEC execution device from the set of the MEC execution devices may be: determining, by the MEC management device, a distance between a location of an MEC execution device in the set of the MEC execution devices and the expected deployment location, where the distance may be a Euclidean distance; and then selecting, by the MEC management device, the target MEC execution device from the set of the MEC execution devices based on the distance. For example, the MEC management device selects an MEC execution device closest to the expected deployment location as the target MEC execution device. According to the method in this embodiment of this application, based on the geographical location of the target MEC execution device, the target MEC execution device is an MEC device suitable for deploying the service execution information, and the method is simple and convenient.

In a possible implementation, further, the method for determining the target MEC execution device may alternatively be: obtaining, by the MEC management device, status information of the MEC execution device; and selecting, by the MEC management device, the target MEC execution device from the set of the MEC execution devices comprehensively using two parameters: the distance and the status information of the MEC execution device. In this embodiment of this application, not only a distance factor is considered, but also a processing capability of the MEC device is considered, and the target MEC execution device is selected by comprehensively using the two parameters.

In a possible implementation, the service execution information includes at least one execution program, there is at least one target MEC execution device, and before sending the service description information and the service execution information to the target MEC execution device, the MEC management device may formulate a deployment policy, where the deployment policy includes a correspondence between the at least one execution program and the at least one target MEC execution device; and then sends a corresponding execution program to the target MEC execution device based on the correspondence.

According to a second aspect, an embodiment of this application provides a computer storage medium, configured to store a computer software instruction used by the foregoing MEC management device. The computer storage medium includes a program designed for performing the foregoing aspect.

According to a third aspect, an embodiment of the present invention provides a management device, and the management device has a function of implementing the function performed by the MEC management device in the foregoing method. The function may be implemented by hardware, or may be implemented by hardware executing corresponding software. The hardware or the software includes one or more modules corresponding to the foregoing function.

According to a fourth aspect, a structure of a management device includes a memory, a network interface, and a processor. The memory is configured to store computer executable program code and is coupled to the network interface. The program code includes an instruction. When executed by the processor, the instruction enables the management device to execute information or an instruction related to the MEC management device in the foregoing method.

According to a first aspect, an embodiment of this application provides a service management method, including the following steps.

An exposure function device receives service description information and service execution information that are sent by a service server and that are of a to-be-deployed service, where the service execution information includes information for executing the service description information. The service server is a third-party service device and is configured to send a service request of the to-be-deployed service to the exposure function device. The service request is used to request the exposure function device 102 to deploy a service. For example, the service may be a search and rescue service for a missing person, a real-time road condition query, or the like. The service request includes the service description information and the service execution information. The service description information is used to specifically describe the to-be-deployed service. The exposure function device sends the service description information and the service execution information to a mobile edge computing MEC management device; determines a set of MEC execution devices; sends the set of the MEC execution devices to the MEC management device, where the set of the MEC execution devices is used to determine, by the MEC management device, a target MEC execution device from a set of MEC devices, the service execution information is used to obtain, by the target MEC execution device, an execution result of the to-be-deployed service based on the service description information, and the execution result is used to obtain, by the MEC management device, a service result of the to-be-deployed service; and receives the service result that is sent by the MEC management device and that is of the to-be-deployed service. The exposure function device is an interface device between the service server and the MEC management device, and is configured to: receive the service request sent by the service server, and send the service description information and the service execution information to the MEC management device. In this embodiment of this application, because an MEC device has a feature including a computing, storage, and processing capability, a third-party server quickly and automatically deploys a third-party service on a network edge device (MEC device), to provide diversified service services for a user.

In a possible implementation, the service description information includes information about a geographical area of the to-be-deployed service, and before determining the set of the MEC execution devices, the exposure function device receives an expected deployment geographical location sent by the MEC management device, where the expected deployment geographical location is a location that is determined by the MEC management device based on the service description information and the service execution information and that is to be deployed when the service execution information executes the service. The exposure function device is responsible for monitoring performance and statuses of all the MEC devices and stores location information of all the MEC devices. The MEC management device sends a query request to the exposure function device, where the query request is used to query an MEC execution device near the expected deployment location. The exposure function device then determines a set of MEC execution devices that falls within a preset range of the expected deployment geographical location.

In a possible implementation, the service description information includes information about a geographical area related to the service, and before sending the service description information to the MEC management device, the exposure function device selects the MEC management device from a plurality of MEC execution devices, where a coverage area of the plurality of MEC execution devices includes the geographical area.

In a possible implementation, a specific manner in which the exposure function device selects the MEC management device from the plurality of MEC execution devices may be: obtaining, by the exposure function device, the information about the geographical area in the service description information, where a coverage area of a plurality of MEC devices includes the geographical area; determining the plurality of MEC devices of which the coverage area includes the geographical area; obtaining, by the exposure function device, status information of the plurality of MEC execution devices, where the status information is used to indicate processing capabilities of the MEC execution devices; and selecting, by the exposure function device from the plurality of MEC execution devices, an MEC execution device having a strongest processing capability as the MEC management device; or selecting, by the exposure function device from the plurality of MEC execution devices, an MEC execution device of which a processing capability is greater than a threshold as the MEC management device.

### BRIEF DESCRIPTION OF DRAWINGS

FIG. 1 is a schematic diagram of a scenario architecture of a communications system according to an embodiment of this application;
FIG. 2 is a schematic diagram of an MEC-based service deployment architecture according to an embodiment of this application;
FIG. 3 is a schematic flowchart of steps of an embodiment of a service management method according to an embodiment of this application;
FIG. 4 is a schematic diagram of a scenario according to an embodiment of this application;
FIG. 5 is a schematic diagram of another scenario according to an embodiment of this application;
FIG. 6 is a schematic structural diagram of an embodiment of a management device according to an embodiment of this application;
FIG. 7 is a schematic structural diagram of another embodiment of a management device according to an embodiment of this application;
FIG. 8 is a schematic structural diagram of another embodiment of a management device according to an embodiment of this application;
FIG. 9 is a schematic structural diagram of another embodiment of a management device according to an embodiment of this application;
FIG. 10 is a schematic structural diagram of another embodiment of a management device according to an embodiment of this application;
FIG. 11 is a schematic structural diagram of an embodiment of an exposure function device according to an embodiment of this application;
FIG. 12 is a schematic structural diagram of another embodiment of an exposure function device according to an embodiment of this application;
FIG. 13 is a schematic structural diagram of another embodiment of an exposure function device according to an embodiment of this application;
FIG. 14 is a schematic structural diagram of another embodiment of an exposure function device according to an embodiment of this application; and
FIG. 15 is a schematic structural diagram of another embodiment of an exposure function device according to an embodiment of this application.

### DESCRIPTION OF EMBODIMENTS

Embodiments of this application provide a service management method, and a related device and system, to automatically deploy a third-party service.

In the specification, claims, and accompanying drawings of this application, the terms "first", "second", "third", "fourth", and the like (if exists) are intended to distinguish between similar objects but do not necessarily indicate a specific order or sequence. It should be understood that, data termed in such a way is interchangeable in proper circumstances, so that the embodiments described herein can be implemented in other orders than the order illustrated or described herein. In addition, the terms "include", "contain", and any variation mean to cover the non-exclusive inclusion, for example, a process, method, system, product, or device that includes a list of steps or units is not necessarily limited to the steps or units that are expressly listed, but may include other steps or units that are not expressly listed or inherent to such a process, method, system, product, or device.

For ease of understanding, the terms in this application are first described.

Mobile edge computing (Mobile Edge Computing, MEC for short): A computing capability is moved down to an edge of a mobile communications network, and functions such as computing, storage, and processing are added to an edge side of a network.

An MEC device in the embodiments of this application may be understood as a device that is deployed at a network edge location close to a location of a terminal and that has a computing, storage, and processing capability. The MEC device may have a location area attribute and a feature of being closer to the terminal (such as a roadside camera).

The MEC device in the embodiments of this application includes an MEC management device and an MEC execution device. It should be noted that the MEC management device and the MEC execution device in the embodiments of this application are merely function division during service execution. Any MEC management device may be used as the MEC management device, or may be used as the MEC execution device.

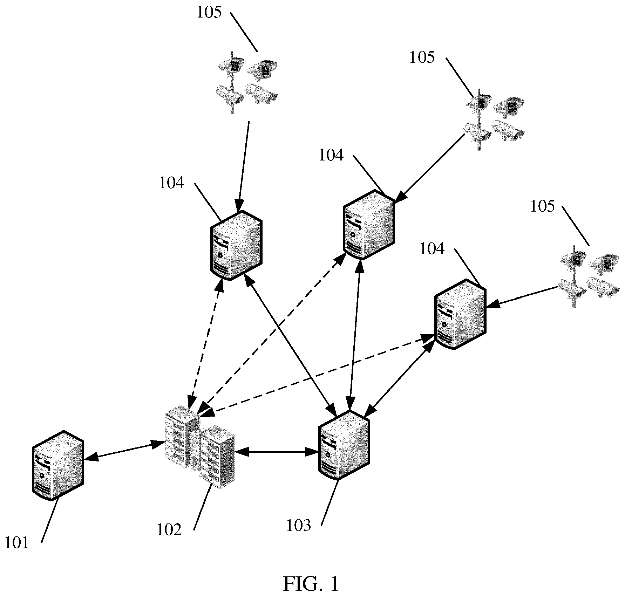

The embodiments of this application provide a service management method. The method is applied to a communications system. FIG. 1 is a schematic diagram of a scenario architecture of a communications system according to an embodiment of this application. The communications system includes a service server 101, an exposure function device 102, an MEC management device 103, an MEC execution device 104, and a terminal 105. The service server 101 is communicatively connected to the exposure function device 102, the exposure function device 102 is communicatively connected to the MEC management device 103, the exposure function device 102 is communicatively connected to the MEC execution device 104, the MEC management device 103 is communicatively connected to the MEC execution device 104, and the MEC execution device 104 is communicatively connected to the terminal 105.

The service server 101 is a third-party service device and is configured to send a service request of a to-be-deployed service to the exposure function device 102. The service request is used to request the exposure function device 102 to deploy a service. For example, the service may be a search and rescue service for a missing person, a real-time road condition query, or the like. The service request includes service description information and service execution information. The service description information is used to specifically describe the to-be-deployed service. For example, if the to-be-deployed service is the search and rescue service for a missing person, the service description information may include a photo, a license plate number, and the like that are related to the missing person. The service execution information is used to execute an execution program related to the to-be-deployed service, and may be understood as a function module, for example, a facial recognition module or a vehicle tracking module.

The exposure function device 102 is an interface device between the service server 101 and the MEC management device 103, and is configured to: receive the service request sent by the service server 101, and send the service description information and the service execution information to the MEC management device 103. The exposure function device 102 is responsible for monitoring performance and statuses of all MEC devices and obtaining geographical locations of all the MEC devices. The MEC devices include the MEC management device 103 and the MEC execution device 104. The exposure function device 102 is further configured to: receive a service result that is fed back by the MEC management device 103 and that is of the to-be-deployed service, and feed back the service result to the service server 101.

The MEC management device 103 is configured to receive the service description information and the service execution information that are sent by the exposure function device 102 and that are of the to-be-deployed service, and may analyze a service requirement, collect status information of the MEC execution device 104, choose to deploy the service on the MEC execution device 104, and send the service description information and the service execution information to the MEC execution device 104. In addition, the MEC management device 103 is configured to: collect and aggregate execution results of all the MEC execution devices 104, to obtain a final service result, and feed back the service result to the exposure function device 102.

The MEC execution device 104 is configured to: receive the service description information and the service execution information that are sent by the MEC management device 103, run the execution program, obtain, based on data uploaded by the terminal 105 and the service description information, the execution result, and send the execution result to the MEC management device 103.

The terminal 105 includes but is not limited to a road surveillance camera, a vehicle-mounted device on a vehicle, a vehicle-mounted sensor, and the like, and is configured to: collect the data, and upload the collected data to the MEC execution device 104.

In this embodiment of this application, the architecture is automatically deployed based on the service. The architecture includes the exposure function device, the MEC management device, the MEC execution device, and the terminal. The architecture is a hierarchical architecture, and enables a third-party server to quickly and automatically deploy a third-party service on a network edge device (MEC device). A high-quality service is provided for a user by using the deployed service. In this way, resource utilization of the MEC device can be improved, and diversified service services can be provided for the user, thereby improving user experience.

In the embodiments of this application, the MEC device is used to quickly and efficiently deploy and manage the service, and a method for automatically deploying and managing the service is provided.

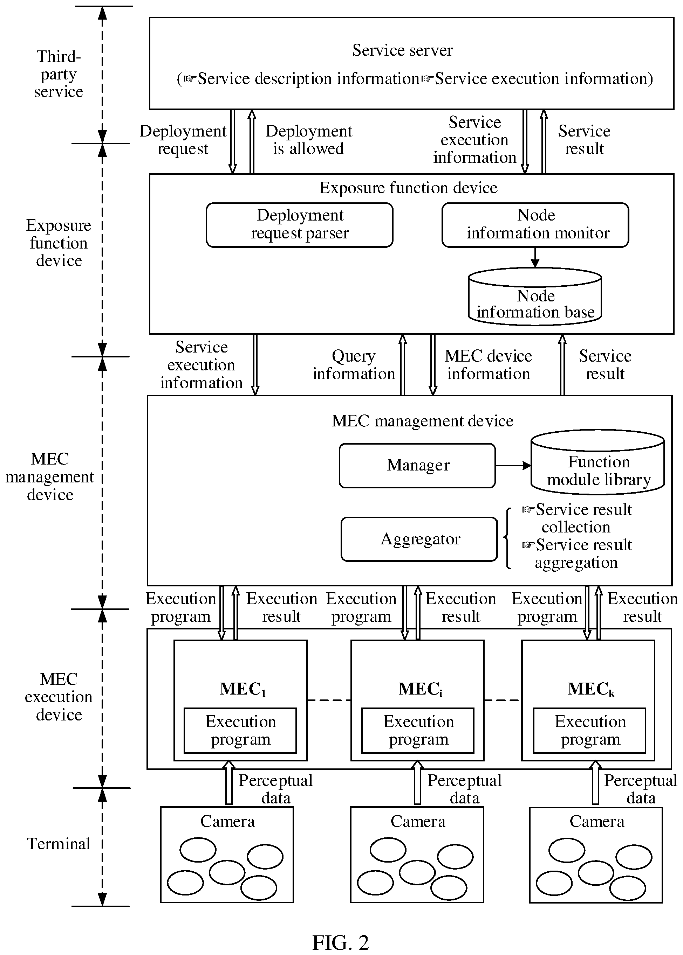

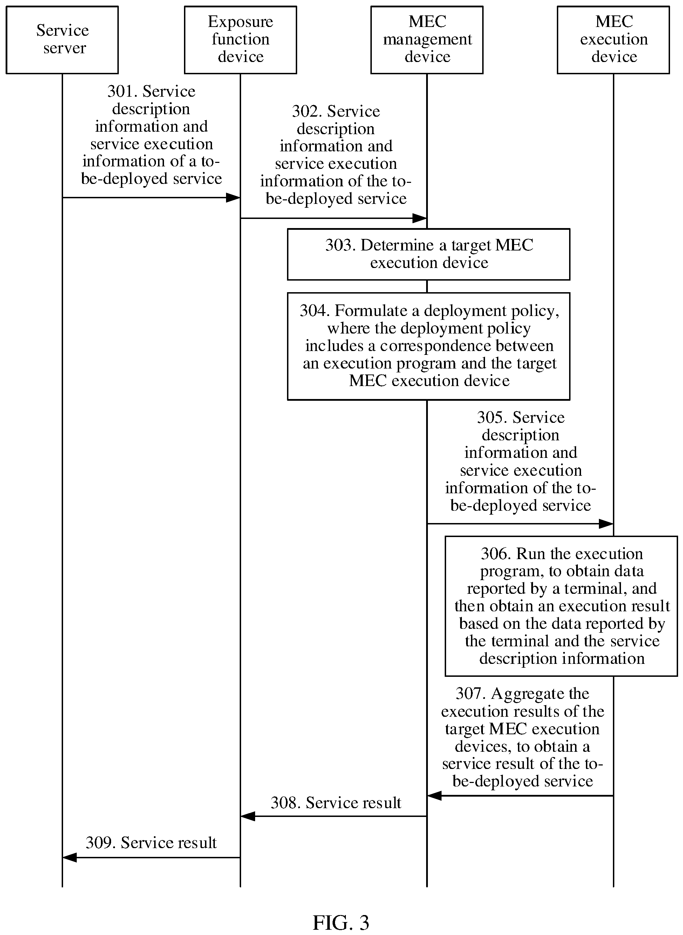

The embodiments of this application are described in detail below and are understood with reference to FIG. 2 and FIG. 3. FIG. 2 is a schematic diagram of an MEC-based service deployment architecture according to an embodiment of this application. FIG. 3 is a schematic flowchart of steps of an embodiment of a service management method according to an embodiment of this application.

Step 301. A service server sends service description information and service execution information of a to-be-deployed service to an exposure function device.

The service server sends a service request of the to-be-deployed service to the exposure function device. The service request includes the service description information and the service execution information. The service execution information includes at least one execution program and a service logical relationship. The execution program is used to execute a function corresponding to the service. The service logical relationship is a relationship between at least two execution programs when there are at least two execution programs. The service logical relationship includes an independency relationship and a dependency relationship. For example, in an application scenario, the service execution information includes a first execution program (for example, a facial recognition module) and a second execution program (for example, a vehicle tracking module). There is no correlation between a result of the first execution program and a result of the second execution program. In other words, an execution result of the first execution program and an execution result of the second execution program do not affect each other, that is, the service logical relationship is the independency relationship. In another application scenario, the service execution information includes a first road congestion analysis module and a second road congestion analysis module. An analysis result of the second road congestion analysis module depends on an analysis result of the first road congestion analysis module, that is, the service logical relationship is the dependency relationship. It should be noted that, in this embodiment of this application, a specific execution program included in the service execution information is merely an example provided for ease of description and does not constitute a limitation on this application. Specifically, the method may include the following steps.
A1: The service server sends the service request of the to-be-deployed service to the exposure function device. The service request includes the service description information. The service request is used to request the exposure function device to deploy the service. Optionally, the service description information may include information about a geographical area related to the service.
A2: After receiving the service request, the exposure function device parses the service request by using a deployment request parser, to obtain the information service description information, and feeds back a response to the service server, where the response is used to indicate that deployment of the service is allowed.
A3: After receiving the response, the service server sends the service execution information to the exposure function device. The service execution information includes the at least one execution program, and the execution program is used to execute the function corresponding to the service.

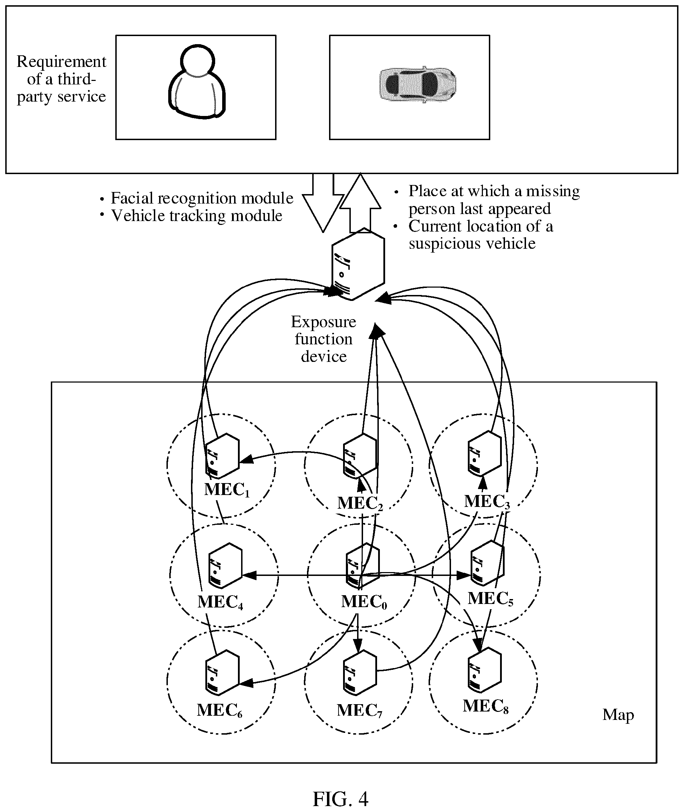

For example, an application scenario is understood with reference to FIG. 4. FIG. 4 is a schematic diagram of a scenario according to an embodiment of this application. The service server sends the service request of the to-be-deployed service to the exposure function device. The service request is a search and rescue request for a missing person. The service description information includes a photo of the missing person, a license plate number of a vehicle that carries the missing person, and the information about the geographical area, where the information about the geographical area may be a place that the missing person may go to, a place that the missing person frequently goes to, a place in which the missing person last appeared before the missing person lost contact, or the like. After receiving the request for querying the missing person, the exposure function device feeds back, to the service server, a response indicating that the deployment is allowed. The running deployment information is used to indicate that the service server can deploy the service. After receiving the response, the service server sends the service execution information to the exposure function device. For example, the service execution information includes the first execution program and the second execution program. The first execution program is a facial recognition execution program (also referred to as the facial recognition module in this example), and is used for facial recognition of the missing person. The second execution program is a vehicle tracking execution program (also referred to as the vehicle tracking module in this example), and is used for recognition of the license plate number of the vehicle that carries the missing person. In this example, the service logical relationship between the facial recognition module and the vehicle tracking module is the independency relationship. In this embodiment of this application, the to-be-deployed service is merely an example provided for ease of description and does not constitute a limitation on this application.

It should be noted that, if a third-party service server has sent a same to-be-deployed service to the exposure function device, the service execution information does not need to be sent to the exposure function device and has been stored in the exposure function device. For example, if the service server sends the search and rescue service request for the missing person to the exposure function device for the first time, and the service server has sent the facial recognition module and the vehicle tracking module to the exposure function device, the service server may not send the facial recognition module and the vehicle tracking module to the exposure function device when requesting, for the second time, to deploy the search and rescue service for the missing person.

Step 302. The exposure function device receives the service description information and the service execution information, and sends the service description information and the service execution information to the MEC management device.

B1: After receiving the service description information and the service execution information, the exposure function device selects the MEC management device from a plurality of MEC devices.

For example, the plurality of MEC devices include MEC₀, MEC₁, MEC₂, ..., and MEC₈.

In a first possible implementation, the exposure function device may specify one of the plurality of MEC devices as the MEC management device.

In a second possible implementation, the exposure function device monitors real-time status information of the MEC devices, where the status information is used to indicate processing capabilities of the MEC devices. The real-time status information includes but is not limited to CPU statuses, current load, current storage capacities, and the like. The exposure function device may select, based on the real-time status information of the MEC devices, an MEC device having a relatively strong processing capability as the MEC management device; or the exposure function device selects, from a plurality of MEC execution devices, an MEC execution device of which a processing capability is greater than a threshold as the MEC management device.

In a third possible implementation, the exposure function device obtains the information about the geographical area in the service description information, where a coverage area of the plurality of MEC devices includes the geographical area, determines the plurality of MEC devices of which the coverage area includes the geographical area, and then selects, from the plurality of MEC devices based on processing capabilities of the plurality of MEC devices, an MEC device having a strongest processing capability as the MEC management device.

For example, in an application scenario, the geographical area in the service description information is a place in which the missing person last appeared, that is, a gate of a shopping mall Q in a street G in a district L of a city F. The exposure function device determines three MEC devices that fall within a range of which a center is the gate of the shopping mall Q and a radius is 5000, and selects, from the three MEC devices, an MEC device having the strongest processing capability as the MEC management device. It should be noted that, in this example, a method for selecting the MEC management device is merely an example for description and does not constitute a limitation on this application.

B2: The exposure function device sends the service description information and the service execution information to the MEC management device.

For example, the exposure function device sends, to the MEC management device, the photo and the license plate number that are related to the missing person, the facial recognition module, the vehicle tracking module, and the service logical relationship between the facial recognition module and the vehicle tracking module.

Step 303. The MEC management device receives the service description information and the service execution information, and determines a target MEC execution device based on the service description information and the service execution information. After receiving the service description information and the service execution information, the MEC management device stores, in a function module library, the execution program included in the service execution information.

Specifically, the method may include the following steps. C1: The MEC management device analyzes a feature of the execution program, and determines, based on a feature of the service execution information and the geographical area, an expected deployment location of the service execution information.

The MEC management device comprehensively determines, based on the feature of the execution program, a service logical relationship between the execution programs, and the geographical area, an expected deployment location of the execution program. In this embodiment of this application, a service that is relatively sensitive to a geographical location may be deployed, and the method is suitable for a service that is sensitive to a geographical location and has a high real-time requirement in a mobile edge computing environment.

For example, the execution program is described still by using the facial recognition module and the vehicle tracking module as an example. The MEC management device analyzes features of the facial recognition module and the vehicle tracking module. For example, the facial recognition module is suitable for being deployed in a densely populated area, or it may be understood that a function of the facial recognition module can be more effective when the facial recognition module is deployed in a densely populated area. The vehicle tracking module is suitable for being deployed on a roadside, or it may be understood that a function of the vehicle tracking module can be more effective when the vehicle tracking module is deployed on a roadside. The expected deployment location falls within the geographical area. In this example, the service logical relationship between the execution programs is the independency relationship. Therefore, the vehicle tracking module and the facial recognition module can be separately deployed, and do not affect each other.

The MEC management device determines expected deployment geographical locations of function modules. For example, the expected deployment location falls within the range of which a center is the gate of the shopping mall Q and a radius is 5000.

C2: The MEC management device sends the expected deployment location to the exposure function device, where the expected deployment location is used to determine, by the exposure function device, a set of MEC execution devices.

The set of the MEC execution devices includes at least one MEC device. For example, a set of expected deployment location points is Lm={(x₁, y₁), ..., (xₖ, yₖ)}, where (x₁, y₁), ..., (xₖ, yₖ) are coordinates of the expected deployment locations.

C3: The MEC management device sends a query request to the exposure function device, where the query request carries the expected deployment location Lm.

The exposure function device is responsible for monitoring performance and statuses of all the MEC devices and stores location information of all the MEC devices. The MEC management device sends the query request to the exposure function device, where the query request is used to query an MEC execution device near the expected deployment location.

C4: The exposure function device receives the query request sent by the MEC management device, and extracts the expected deployment location Lm.

C5: The exposure function device queries, from a node information base, an MEC device that falls within a preset range of the expected deployment location Lm. For example, an MEC device that falls within a preset range of an expected deployment location (x₁, y₁) is MEC₁, and MEC devices that fall within a preset range of an expected deployment location (x₂, y₂) are MEC₂ and MEC₃. It should be noted that a quantity of MEC devices that fall within a preset range of one expected deployment location is not limited, and the set of the MEC execution devices includes MEC devices that fall within preset ranges of the expected deployment locations in Lm. For example, a set of locations of the MEC execution devices is Le={(x₁', y₁'), ..., (xₙ', yₙ')}-

C6: The exposure function device sends the set Le of the MEC execution devices to the MEC management device. The set Le of the MEC execution devices may also be understood as an initial set of the MEC execution devices.

C7: The MEC management device receives the set Le of the MEC execution devices sent by the exposure function device.

C8: The MEC management device selects the target MEC execution device from the set of the MEC execution devices.

In a possible implementation, the MEC management device determines a distance between a location of an MEC execution device in the set of the MEC execution devices and the expected deployment location, and selects the target MEC execution device from the set of the MEC execution devices based on the distance.

For example, the service execution information includes N execution programs, and an expected geographical location includes N expected deployment locations. An i^{th} execution program in the N execution programs corresponds to an i^{th} expected deployment location in the N expected deployment locations. The MEC management device compares distances between the i^{th} expected deployment location in the expected geographical location and geographical locations of the MEC execution devices in the set of the MEC execution devices, and all values of N are assigned to i.

If a distance between the i^{th} expected deployment location and a j^{th} MEC execution device is the shortest, the MEC management device determines that the i^{th} expected deployment location matches the j^{th} MEC execution device.

The MEC management device establishes a correspondence between the i^{th} execution program corresponding to the i^{th} expected deployment location and the j^{th} MEC execution device.

The MEC management device calculates, based on the expected deployment location point Lm={(x₁, y₁), ..., (xₖ, yₖ)} and the set Le={(x₁', y₁'), ..., (xₙ', yₙ')} of the MEC execution devices, a distance Dᵢⱼ between an i^{th} location point and a j^{th} MEC node in the set of the MEC execution devices, and selects the j^{th} MEC execution device closest to the i^{th} expected deployment location as the target MEC execution device.

In another possible implementation, the MEC management device obtains real-time status information of each MEC execution device from the exposure function device, and selects, based on the distance and the real-time status information of each MEC execution device, the target MEC execution device from the set of the MEC execution devices. The real-time status information includes but is not limited to a CPU status, a load status, a storage status, and the like of each MEC execution device. For example, if a distance between the i^{th} expected deployment location and the j^{th} MEC execution device is X, a distance between the i^{th} expected deployment location and a k^{th} MEC execution device is Y, and a difference parameter between X and Y is less than a threshold, it may be understood that, when a difference between the distances between the two MEC execution devices and the same expected deployment location is relatively small, the target MEC execution device that matches the i^{th} expected deployment location may further be selected based on the real-time status information of the two MEC execution devices. For example, a processing capability of the current k^{th} MEC execution device is greater than a processing capability of the j^{th} MEC execution device (denoted as "MECj"). In this case, the k^{th} MEC execution device (denoted as "MECk") is selected as the target MEC execution device that matches the i^{th} expected deployment location.

Step 304. The MEC management device formulates a deployment policy by using a manager, where the deployment policy includes a correspondence between the execution program and the target MEC execution device.

After selecting the target MEC execution device, the MEC management device sends a sub-service deployment request to the target MEC execution device. For example, the MEC management device sends the sub-service deployment request to the k^{th} target MEC execution device (MECk), where the sub-service deployment request is used to request to deploy a sub service, that is, a vehicle tracking service. The target MEC execution device feeds back deployment acknowledgment information to the MEC management device based on the sub-service deployment request. After receiving the deployment acknowledgment information, the MEC management device determines that the target MEC execution device can execute the sub service, and formulates the deployment policy.

There is at least one execution program and at least one target MEC execution device. The MEC management device determines the target MEC execution device that matches the i^{th} expected deployment location and the execution program (for example, the facial recognition module) corresponding to the i^{th} expected deployment location, so that the correspondence between the execution program and the target MEC execution device can be determined. For example, there is a correspondence between the facial recognition module and the j^{th} MEC execution device (MECj), and there is a correspondence between the vehicle tracking module and the k^{th} MEC execution device (MECₖ).

It should be noted that, during actual application, there may be a one-to-one relationship, a one-to-many relationship, or a many-to-one relationship between the execution program and the target MEC execution device. For example, there are N execution programs and N expected deployment locations, and N is three. The execution programs are respectively the facial recognition module, the vehicle tracking module, and an image recognition module. An expected deployment location of the facial recognition module is a densely populated area and corresponds to the first expected location, an expected deployment location of the vehicle tracking module is a roadside and corresponds to the second expected deployment location, and an expected deployment location of the image recognition module may also be a roadside and corresponds to the third expected deployment location. Based on the distance and the real-time status information of the MEC execution device, it is determined that an MEC execution device that matches the second expected deployment location and the third expected deployment location is MECk. In other words, the facial recognition module and the vehicle tracking module correspond to the k^{th} MEC execution device (MECk). Certainly, in another case, one execution program may correspond to at least two MEC execution devices. For example, when the vehicle tracking module recognizes a clear license plate number, a relatively small quantity of resources are required, and one MEC device may independently complete the recognition. If the vehicle tracking module recognizes a fuzzy license plate number, a calculation amount is relatively large, and collaborative cooperation of a plurality of MEC devices is required. In this way, a recognition speed can be increased. It should be noted that, in this example, the correspondence between the execution program and the expected deployment location and the execution program are used as an example for description and does not constitute a limitation on this application.

Step 305. The MEC management device sends the service description information and the service execution information to the target MEC execution device.

The MEC management device extracts the execution program from the function module library, and sends the corresponding execution program to the target MEC execution device based on the deployment policy.

For example, the MEC management device sends the facial recognition module to the j^{th} target execution device (MECj), and sends the vehicle tracking module to the k^{th} MEC execution device (MECₖ).

Step 306. The target MEC execution device receives the service description information and the execution program that are sent by the MEC management device, runs the execution program, to obtain data reported by a terminal, and then obtains the execution result based on the data reported by the terminal and the service description information.

For example, in an application scenario, the j^{th} target MEC execution device is located in a densely populated area. The target MEC execution device receives the photo of the missing person and the facial recognition module that are sent by the MEC management device, runs the facial recognition module, and receives image information (for example, a photo) obtained by each terminal. The facial recognition module matches the photo reported by the terminal with the photo of the missing person, to obtain an execution result. If the matching succeeds, the execution result includes a timestamp at which the matching succeeds and a geographical location at which the terminal obtains the photo. If the matching fails, the execution result includes a geographical location at which the terminal obtains the photo and a corresponding timestamp. Although the matching fails, the execution result indicates the time and the location at which the missing person is not found, to help narrow a search range and further check a track of the missing person. For another example, the k^{th} target MEC execution device is located on a roadside. The target MEC execution device receives a photo of the license plate number and the vehicle tracking module that are sent by the MEC management device, runs the vehicle tracking module, and receives image information reported by each terminal (for example, a road surveillance camera). The vehicle tracking module matches the received photo reported by the terminal with the license plate number of the to-be-tracked vehicle, to obtain an execution result. If the matching succeeds, the execution result includes a timestamp at which the matching succeeds and a geographical location at which the terminal obtains the photo. If the matching fails, the execution result includes a geographical location at which the terminal obtains the photo and a corresponding timestamp.

Step 307. The MEC management device receives the execution results sent by the target MEC execution devices, and aggregates the execution results of the target MEC execution devices by using an aggregator, to obtain a service result of the to-be-deployed service.

After receiving the execution results sent by the target MEC execution devices, the MEC management device aggregates the execution results of the target MEC execution devices based on the service logical relationship, to obtain the service result of the to-be-deployed service.

In this example, the service logical relationship between the two execution programs: the facial recognition module and the vehicle tracking module is independency. For example, the service result includes that the missing person was found at a location P at 12:06 on January 10, 2018 and that the vehicle that carries the missing person was found at a location F at 10:06 on January 10, 2018.

Step 308. The MEC management device sends the service result to the exposure function device.

Optionally, the MEC management device may alternatively send the service result and the deployment policy to the exposure function device. The exposure function device stores the deployment policy.

Step 309. The exposure function device sends the service result of the to-be-deployed service to the service server.

In this embodiment of this application, in a mobile edge environment, the MEC device is used to automatically deploy a third-party service. The exposure function device is an interface device between the third-party service server and the MEC management device. The MEC management device receives the service description information and the service execution information that are sent by the exposure function device and that are of the to-be-deployed service, where the service execution information includes the at least one execution program, and the execution program is used to execute the function corresponding to the to-be-deployed service; then determines the target MEC execution device, where the target MEC execution device is an MEC device that specifically executes the to-be-deployed service; sends the service description information and the service execution information to the target MEC execution device; receives the execution results that are sent by the target MEC execution devices and that are of the service execution information; aggregates the execution results sent by the target MEC execution devices, to obtain the service result of the to-be-deployed service; and sends the service result to the exposure function device. The exposure function device sends the service result to the third-party service server.

In this example, the to-be-deployed service is the search and rescue service for the missing person, and collaborative cooperation of two dimensions (a horizontal dimension and a vertical dimension) is implemented, that is, both facial recognition and vehicle tracking can be performed, and different execution programs are sent to the corresponding target MEC execution devices, so that the plurality of MEC execution devices collaborate with each other. Horizontal dimension: The facial recognition module and the vehicle tracking module are deployed. The two execution programs complete different functions. The facial recognition module may be configured to search for a location and a time at which the missing person last appeared, and the vehicle tracking module is configured to track a current location of a suspicious vehicle and a corresponding time. The two execution programs jointly detect a location of the missing person and a corresponding time. Vertical dimension: Each function module may need collaborative cooperation of a plurality of edge devices. For example, when the vehicle tracking module recognizes a clear license plate number, a relatively small quantity of resources are required, and one MEC device may independently complete the recognition. When the vehicle tracking module recognizes a fuzzy license plate number, a calculation amount is relatively large, and collaborative cooperation of the plurality of MEC devices is required. In this way, a recognition speed can be increased. In this example, the to-be-deployed service has a high real-time requirement and is relatively sensitive to the location. In this embodiment of this application, by using the architecture including the exposure function device, the MEC management device, and the MEC execution device, the third-party service can be automatically deployed, and resource utilization of the MEC device can be improved. The MEC device locally processes road condition data uploaded by all cameras in a coverage area of the MEC device, so that communication congestion and high transmission costs caused by transmission of a large amount of road condition data are avoided. In addition, the plurality of MEC execution devices collaborate with each other to jointly complete an entire service, thereby improving service execution efficiency.

To better understand this application, a specific application scenario to which this application is applied is described in detail below.

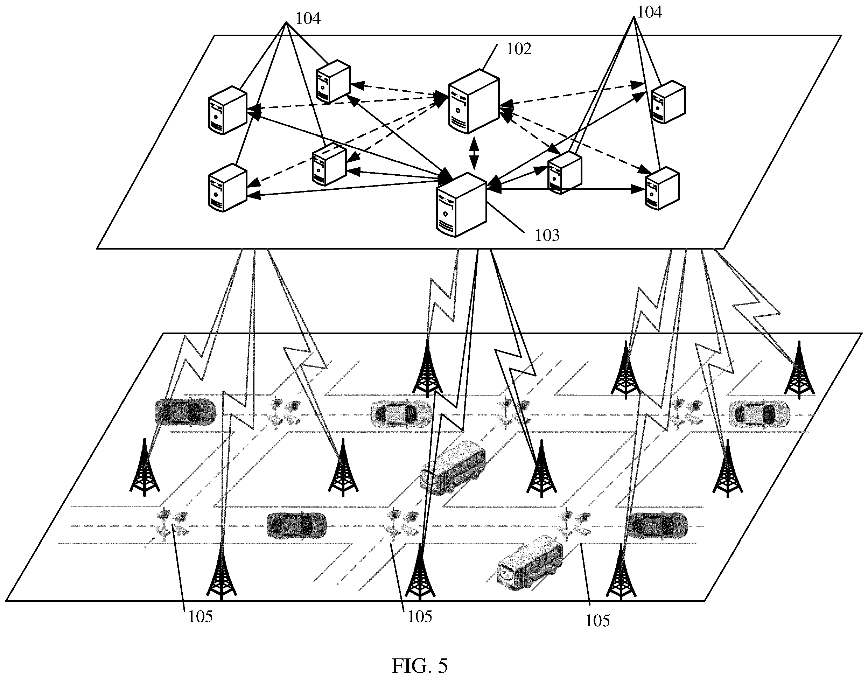

FIG. 5 is a schematic diagram of a scenario according to an embodiment of this application.

In another application scenario provided in the embodiments of this application, a service description of a to-be-deployed service of the application scenario is as follows: Distributed MEC devices have location awareness features, and each MEC device has features such as having a specific coverage area and being closer to a terminal (for example, a roadside camera). In this way, a real-time road condition monitoring service is deployed on the MEC device, and road condition data uploaded by the roadside camera is processed and analyzed in real time, to obtain current congestion information (for example, congestion, crowding, slow moving, and smoothness) of a city road. The MEC device analyzes road condition data uploaded by a camera in the coverage area, so that congestion information of all roads in the coverage area can be obtained. An exposure function device monitors status information of all the MEC devices. For example, the status information includes remaining resource information, load information, CPU status information, and storage status information.

G1: A third-party service server sends a service deployment request to the exposure function device, where the service deployment request carries service description information, the service description information includes a geographical area, and the geographical area is an area in which a to-be-monitored road condition is located.

The exposure function device receives and parses the service deployment request, to obtain the geographical area. For example, the service deployment request is a real-time road condition query request, and the geographical area is "Bulong Road, Shenzhen". In this example, the geographical area is merely an example for description and does not constitute a limitation on this application.

Specifically, the exposure function device queries a plurality of MEC devices in the geographical area included in the coverage area, and selects one of the plurality of MEC devices as an MEC management device. A specific method for selecting the MEC management device by the exposure function device may be understood with reference to step B1 in the foregoing embodiment. Details are not described herein again.

The exposure function device returns a response to the third-party service server, where the response is used to indicate that deployment of the real-time road condition query service is allowed.

After receiving the response, the third-party service server sends service execution information to the exposure function device. For example, the service execution information includes a road congestion analysis execution program (that is, a road congestion analysis module) and a service logical relationship. The service logical relationship is a service logical relationship between the road congestion analysis modules.

G2: The MEC management device analyzes a feature of the road congestion analysis module and the geographical area, and obtains a set of MEC execution devices based on the feature of the road congestion analysis module and the geographical area.

The MEC management device extracts the road congestion analysis module and the service logical relationship that are in the service deployment request, and stores the road congestion analysis module in a function module library.

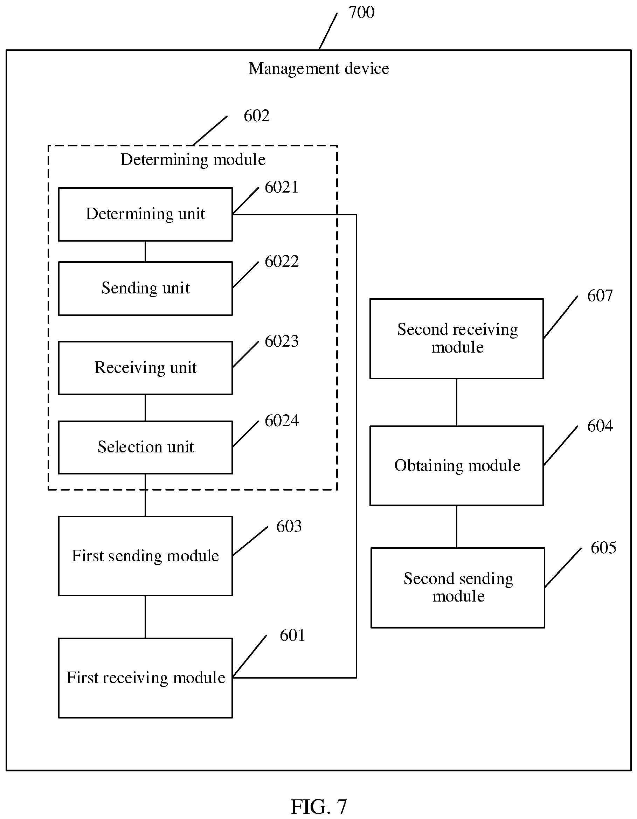

The MEC management device analyzes a feature of an analysis function module and the service logical relationship, and determines an expected deployment location of the road congestion analysis module. For example, the MEC management device analyzes the feature of the road congestion analysis module. The road congestion analysis module needs to be deployed on a roadside, and the expected deployment location is close to "Bulong Road, Shenzhen". In other words, the road congestion analysis module needs to be deployed on an MEC device that can cover "Bulong Road, Shenzhen". In an implementation, a to-be-monitored road may be segmented. For example, "Bulong Road" is divided into M sections, and the road congestion analysis module is deployed based on different road sections. Understanding with reference to FIG. 7, FIG. 7 is a schematic diagram of a scenario according to an embodiment of this application. The "Bulong Road" includes a road section 1, a road section 2, a road section 3, ..., and a road section M. For the road section 1, expected deployment locations of a road congestion analysis module are (x₁, y₁) and (x₂, y₂); for the road section 2, expected deployment locations of a road congestion analysis module are (x₃, y₃) and (x₄, y₄), and so on. After each road section is analyzed, a set Lm={(x₁, y₁), ..., (xₖ, yₖ)} of expected deployment locations is obtained. The MEC management device re-encapsulates a query for MEC execution devices that meet the expected deployment locations into the query request by using Lm as a query keyword, and sends the query request to the exposure function device. The service logical relationship is a logical relationship between the road congestion analysis modules. For example, a road congestion analysis module that corresponds to the road section 1 and that is deployed at an expected deployment location point (x₁, y₁) is a first road congestion analysis module. Similarly, a second road congestion analysis module is deployed at an expected deployment location point (x₂, y₂). Corresponding to the road section 2, a third road congestion analysis module is deployed at an expected deployment location point (x₃, y₃); corresponding to the road section 3, a fourth road congestion analysis module is deployed at an expected deployment location point (x₄, y₄), and so on. Examples are not listed one by one herein. It is assumed that a direction of a vehicle flow is from the road section 1 to the road section 5. In this case, the first road congestion analysis module and the second road congestion analysis module are configured to analyze a road congestion status of the road section 1, and the third road congestion analysis module is configured to analyze a road congestion status of the road section 2. Analysis of a road congestion status of a subsequent road section, for example, a road congestion status of the road section 3, has a dependency relationship with analysis results of the foregoing two road sections (that is, the road section 1 and the road section 2). Therefore, in this example, the service logical relationship between the road congestion analysis modules is the dependency relationship.

The exposure function device parses the query request, to extract Lm; obtains a set of MEC execution devices that falls within a preset range of Lm, where a coverage area of the MEC execution devices includes the geographical area; obtains real-time status information of the MEC execution devices that cover the geographical area and the set Le={(x₁', y₁'), ..., (xₙ', yₙ')} of the MEC execution devices; adds all the MEC execution devices that participate in deployment to an initial execution node set, where the initial execution node set is the set of the MEC execution devices; and sends the set of the MEC execution devices to the MEC management device. The MEC management device receives the set of the MEC execution devices sent by the exposure function device.

G3: The MEC management device determines a target MEC execution device based on the locations and the status information of the MEC execution device.

The MEC management device calculates, based on the expected deployment location point Lm={(x₁, y₁), ..., (xₖ, yₖ)} and the set Le={(x₁', y₁'), ..., (xₙ', yₙ')} of the MEC execution devices, a distance Dij between an i^{th} expected deployment location point and a j^{th} MEC execution device in the set of the MEC execution devices, and selects an MEC execution device closest to the i^{th} location point. For example, (x₁, y₁) is used as an example, and location points that are closest to (x₁, y₁) are (x₁', y₁') and (x₂', y₂'). The MEC management device obtains real-time status information of an MEC execution device (MEC₁) located at (x₁', y₁') and real-time status information of an MEC execution device (MEC₂) located at (x₂', y₂'). If a processing capability of MEC₁ is greater than a processing capability of MEC₂, the MEC management device selects MEC₁ as the target MEC execution device.

G4: The MEC management device formulates a deployment policy.

Specifically, the MEC management device sends a sub-service deployment request to each target MEC execution device, to query whether the road congestion analysis module can be deployed.

The target MEC execution device receives the sub-service deployment request, and returns deployment acknowledgment information to the MEC management device based on the sub-service deployment request if the road congestion analysis module can be deployed.

The MEC management device determines a final target MEC execution device based on the received deployment acknowledgment information, and formulates the deployment policy. The deployment policy includes a correspondence between the road congestion analysis module and the target MEC execution device.

G5: The MEC management device sends the corresponding road congestion analysis module to the target MEC execution device based on the deployment policy.

The MEC management device extracts the road congestion analysis module from the function module library, and distributes the road congestion analysis module to the corresponding target MEC execution device. For example, the first road congestion analysis module is sent to MEC₁, and the second road congestion analysis module is sent to MEC₂.

G6: The target MEC execution device receives the road congestion analysis module, runs the road congestion analysis module, then receives data reported by the terminal (for example, image information obtained by a road surveillance camera), and analyzes the data reported by the terminal, to obtain an execution result. The execution result includes a timestamp, congestion information, and a geographical location. The target MEC execution device returns the execution result to the MEC management device. For example, an execution result fed back by MEC₁ is that a vehicle is slowly moving, and an execution result fed back by MEC₂ is that a vehicle is slowly moving.

G7: The MEC management device aggregates execution results returned by all the target MEC execution devices, to obtain a service result, that is, the road congestion status, and returns a road network congestion status and a service deployment policy to the exposure function device. For example, if the service result is that the vehicle is slowly moving on a first road section and a second road section, and is congested on a fourth road section, "Bulong Road" has a large overall traffic volume and the vehicle is slowly moving on "Bulong Road".

G8: The exposure function device returns the road network congestion status in the geographical area to a third-party server. Optionally, the exposure function device stores the service deployment policy.

In this example, in a mobile edge environment, the real-time road condition monitoring service is deployed based on a requirement of a user, and a road condition congestion analysis module is deployed on an MEC execution module by using the exposure function device, the MEC management device, the MEC execution device, and the terminal, to automatically deploy a service. Resource utilization of an edge device can be improved, and a speed of processing the road condition data can be improved through collaboration of the plurality of MEC execution devices.

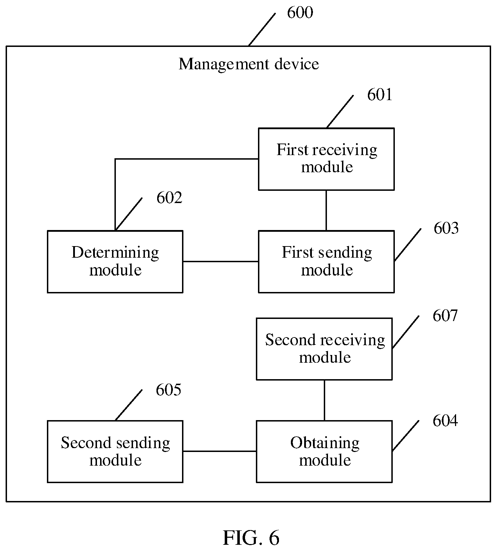

Referring to FIG. 6, an embodiment of this application provides an embodiment of a management device 600. The management device 600 includes:
a first receiving module 601, configured to receive service description information and service execution information that are sent by an exposure function device and that are of a to-be-deployed service, where the service execution information includes information for executing the service description information;
a determining module 602, configured to determine a target MEC execution device;
a first sending module 603, configured to send the service description information and the service execution information that are received by the first receiving module 601 to the target MEC execution device determined by the determining module 602;
a second receiving module 607, configured to receive an execution result that is sent by the target MEC execution device and that is of the service execution information, where the execution result is obtained by the target MEC execution device based on the service description information and the service execution information;
an obtaining module 604, configured to obtain a service result of the to-be-deployed service based on the execution result received by the second receiving module 607; and
a second sending module 605, configured to send the service result obtained by the obtaining module 604 to the exposure function device.

Optionally, the description information includes information about a geographical area of the to-be-deployed service.

The determining module 602 is further configured to determine the target MEC execution device based on a feature of the service execution information and the geographical area.

Referring to FIG. 7, based on the embodiment corresponding to FIG. 6, an embodiment of this application further provides another embodiment of a management device 700.

The determining module 602 further includes a determining unit 6021, a sending unit 6022, a receiving unit 6023, and a selection unit 6024.

The determining unit 6021 is further configured to determine an expected deployment location of the execution information based on the feature of the execution information received by the first receiving module 601.

The sending unit 6022 is configured to send the expected deployment location determined by the determining unit 6021 to the exposure function device, where the expected deployment location is used to determine, by the exposure function device, a set of MEC execution devices, and a coverage area of the set of the MEC execution devices includes the geographical area.

The receiving unit 6023 is configured to receive the set of the MEC execution devices sent by the exposure function device.

The selection unit 6024 is configured to select the target MEC execution device from the set of the MEC execution devices received by the receiving unit 6023.

Optionally, the selection unit 6024 is further configured to: determine a distance between a location of an MEC execution device in the set of the MEC execution devices and the expected deployment location, and select the target MEC execution device from the set of the MEC execution devices based on the distance.

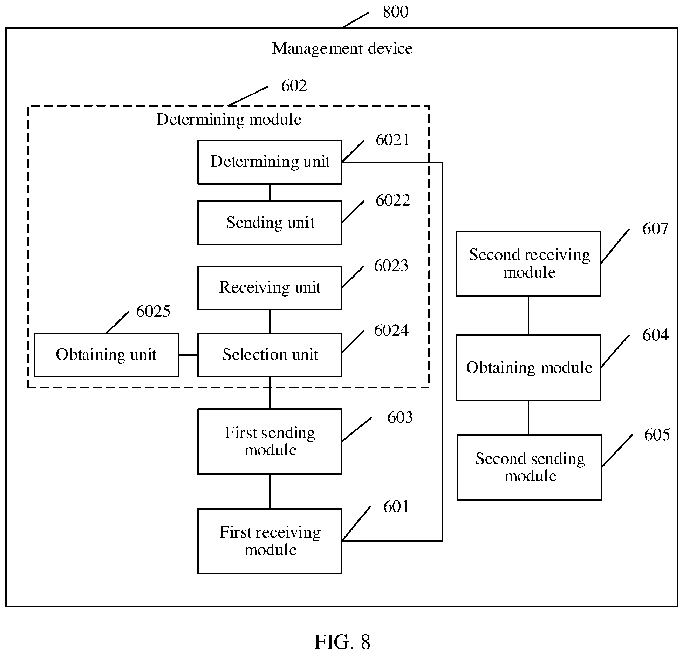

Referring to FIG. 8, based on the embodiment corresponding to FIG. 7, an embodiment of this application further provides another embodiment of a management device 800.

The management device further includes an obtaining unit 6025.

The obtaining unit 6025 is further configured to obtain status information of the MEC execution device.

The selection unit 6024 is further configured to select the target MEC execution device from the set of the MEC execution devices based on the distance and the status information of the MEC execution device.

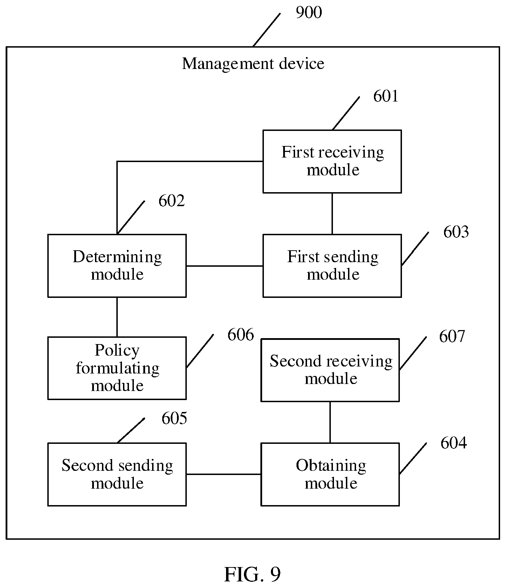

Referring to FIG. 9, based on the embodiment corresponding to FIG. 6, an embodiment of this application further provides another embodiment of a management device 900. The service execution information includes at least one execution program, there is at least one target MEC execution device, and the management device further includes a policy formulating module 606.

The policy formulating module 606 is configured to formulate a deployment policy, where the deployment policy includes a correspondence between the at least one execution program and the at least one target MEC execution device that is determined by the determining module 602.

The first sending module 603 is further configured to send a corresponding execution program to the target MEC execution device based on the correspondence determined by the policy formulating module 606.

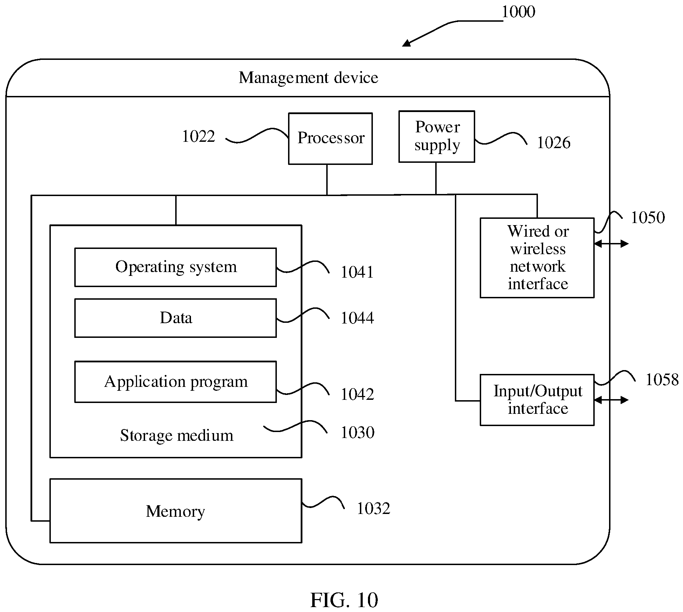

Further, the management devices in FIG. 6 to FIG. 9 are presented in a form of a function module. The "module" herein may be an application-specific integrated circuit (application-specific integrated circuit, ASIC), a circuit, a processor that executes one or more software or firmware programs and a memory, an integrated logical circuit, and/or another device that can provide the foregoing functions. In a simple embodiment, the management devices in FIG. 6 to FIG. 9 may use a form shown in FIG. 10.

FIG. 10 is a schematic structural diagram of a management device according to an embodiment of this application. The management device 1000 may vary greatly due to different configurations or performance, and may include one or more processors 1022, a memory 1032, and one or more storage media 1030 (for example, one or more mass storage devices) that store an application program 1042 or data 1044. The memory 1032 and the storage medium 1030 may perform transient storage or permanent storage. The program stored in the storage medium 1030 may include one or more modules (not shown in the figure), and each module may include a series of instruction operations in the management device. Furthermore, the processor 1022 may be configured to communicate with the storage medium 1030, and perform, on the management device 1000, the series of instruction operations in the storage medium 1030.

The management device 1000 may further include one or more power supplies 1026, one or more wired or wireless network interfaces 1050, one or more input/output interfaces 1058, and/or one or more operating systems 1041.

The steps performed by the MEC management device in the foregoing method embodiments may be based on the structure of the management device shown in FIG. 10.

The processor 1022 enables the management device to perform the method performed by the MEC management device in the method embodiment corresponding to FIG. 3.

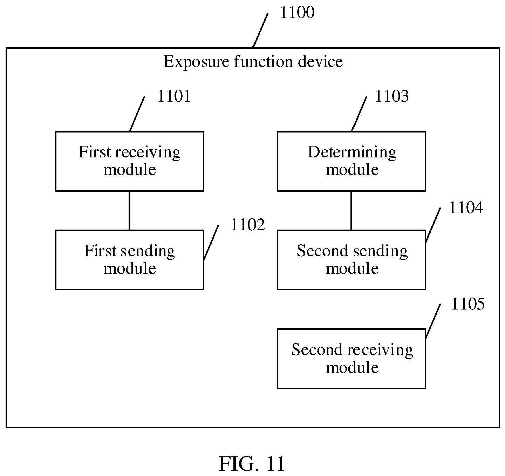

Referring to FIG. 11, an embodiment of this application provides an embodiment of an exposure function device 1100. The exposure function device 1100 includes:
a first receiving module 1101, configured to receive service description information and service execution information that are sent by a service server and that are of a to-be-deployed service, where the service execution information includes information for executing the service description information;
a first sending module 1102, configured to send the service description information and the service execution information that are received by the first receiving module 1101 to a mobile edge computing MEC management device;
a determining module 1103, configured to determine a set of MEC execution devices;
a second sending module 1104, configured to send the set of the MEC execution devices determined by the determining module 1103 to the MEC management device, where the set of the MEC execution devices is used to determine, by the MEC management device, a target MEC execution device from a set of MEC devices, the service execution information is used to obtain, by the target MEC execution device, an execution result of the to-be-deployed service based on the service description information, and the execution result is used to obtain, by the MEC management device, a service result of the to-be-deployed service; and
a second receiving module 1105, configured to receive the service result that is sent by the MEC management device and that is of the to-be-deployed service.

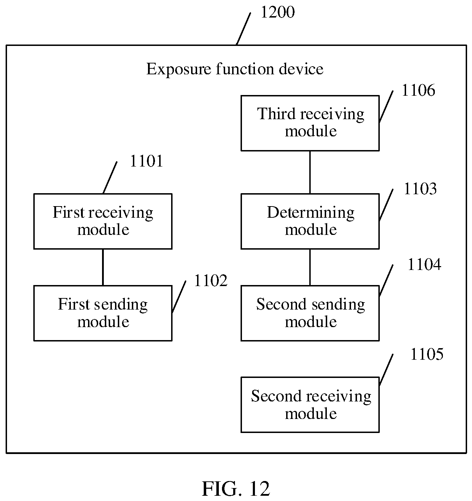

Referring to FIG. 12, based on the embodiment corresponding to FIG. 11, this application provides another embodiment of an exposure function device 1200.

The service description information includes information about a geographical area of the to-be-deployed service.

The exposure function device further includes a third receiving module 1106.

The third receiving module 1106 is configured to receive an expected deployment geographical location sent by the MEC management device, where the expected deployment geographical location is a location that is determined by the MEC management device based on the service description information and the service execution information and that is to be deployed when the service execution information executes the service.

The determining module 1103 is further configured to determine a set of MEC execution devices that falls within a preset range of the expected deployment geographical location received by the third receiving module 1106.

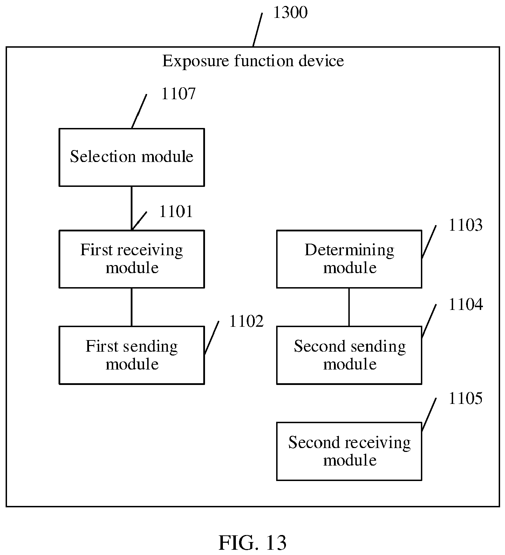

Referring to FIG. 13, based on the embodiment corresponding to FIG. 11, this application provides another embodiment of an exposure function device 1300. The service description information includes information about a geographical area related to the service.

The exposure function device further includes a selection module 1107.

The selection module 1107 is configured to select the MEC management device from a plurality of MEC execution devices, where a coverage area of the plurality of MEC execution devices includes the geographical area received by the first receiving module 1101.

Optionally, the selection module 1107 is further configured to: determine the plurality of MEC execution devices based on the geographical area; obtain status information of the plurality of MEC execution devices, where the status information is used to indicate processing capabilities of the MEC execution devices; and select, from the plurality of MEC execution devices, an MEC execution device having a strongest processing capability as the MEC management device; or select, by the exposure function device from the plurality of MEC execution devices, an MEC execution device of which a processing capability is greater than a threshold as the MEC management device.

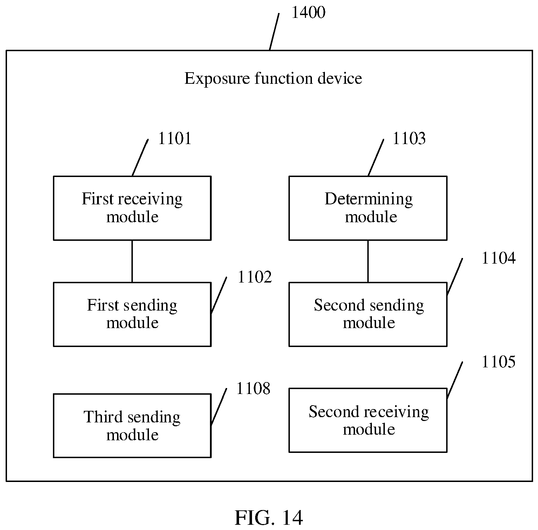

Referring to FIG. 14, based on the embodiment corresponding to FIG. 11, this application provides another embodiment of an exposure function device 1400. The exposure function device 1400 further includes a third sending module 1108.

The third sending module 1108 is configured to send a service deployment acknowledgment response to the service server, where the response is used to instruct the service server to send the service execution information of the to-be-deployed service to the exposure function device. An embodiment of this application further provides a computer storage medium, configured to store a computer software instruction used by the foregoing management device. The computer storage medium executes a program executed by the MEC management device in the foregoing method embodiments.

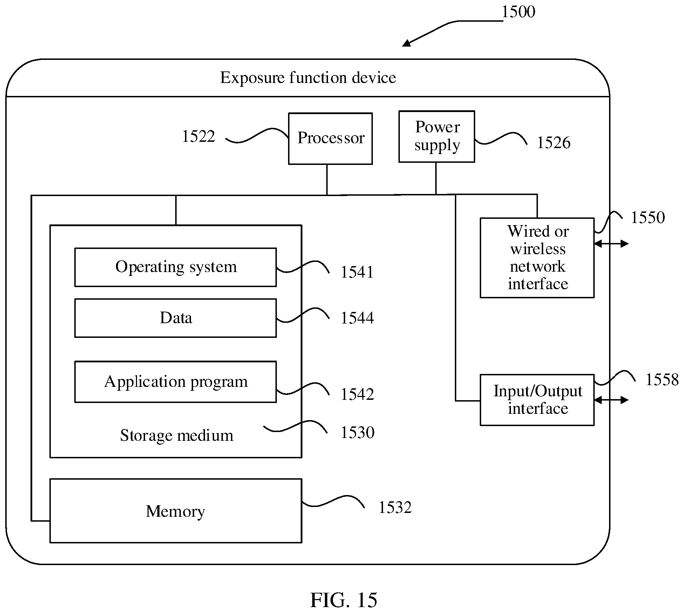

Further, the exposure function devices in FIG. 11 to FIG. 14 are presented in a form of a function module. The "module" herein may be an application-specific integrated circuit (application-specific integrated circuit, ASIC), a circuit, a processor that executes one or more software or firmware programs and a memory, an integrated logical circuit, and/or another device that can provide the foregoing functions. In a simple embodiment, the exposure function devices in FIG. 11 to FIG. 14 may use a form shown in FIG. 15.

FIG. 15 is a schematic structural diagram of an exposure function device according to an embodiment of this application. The exposure function device 1500 may vary greatly due to different configurations or performance, and may include one or more processors 1522, a memory 1532, and one or more storage media 1530 (for example, one or more mass storage devices) that store an application program 1542 or data 1544. The memory 1532 and the storage medium 1530 may perform transient storage or permanent storage. The program stored in the storage medium 1530 may include one or more modules (not shown in the figure), and each module may include a series of instruction operations in the exposure function device. Furthermore, the processor 1522 may be configured to communicate with the storage medium 1530, and perform, on the exposure function device 1500, the series of instruction operations in the storage medium 1530.

The exposure function device 1500 may further include one or more power supplies 1526, one or more wired or wireless network interfaces 1550, one or more input/output interfaces 1558, and/or one or more operating systems 1541.

The steps performed by the exposure function device in the foregoing method embodiments may be based on the structure of the exposure function device shown in FIG. 15. The processor 1522 enables the exposure function device to perform the method performed by the exposure function device in the foregoing method embodiments.

An embodiment of this application further provides a computer storage medium, configured to store a computer software instruction used by the foregoing exposure function device. The computer storage medium executes a program executed by the exposure function device in the foregoing method embodiments.

It may be clearly learned by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Based on the above, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A service management method, comprising:
receiving, by a mobile edge computing MEC management device, service description information and service execution information that are sent by an exposure function device and that are of a to-be-deployed service, wherein the service execution information comprises information for executing the service description information;
determining, by the MEC management device, a target MEC execution device;
sending, by the MEC management device, the service description information and the service execution information to the target MEC execution device;
receiving, by the MEC management device, an execution result that is sent by the target MEC execution device and that is of the service execution information, wherein the execution result is obtained by the target MEC execution device based on the service description information and the service execution information;
obtaining, by the MEC management device, a service result of the to-be-deployed service based on the execution result; and
sending, by the MEC management device, the service result to the exposure function device.

2. The method according to claim 1, wherein the description information comprises information about a geographical area of the to-be-deployed service, and the determining, by the MEC management device, a target MEC execution device comprises:
determining, by the MEC management device, the target MEC execution device based on a feature of the service execution information and the geographical area.

3. The method according to claim 2, wherein the determining, by the MEC management device, the MEC execution device based on a feature of the service execution information and the geographical area comprises:
determining, by the MEC management device, an expected deployment location of the execution information based on the feature of the execution information;
sending, by the MEC management device, the expected deployment location to the exposure function device, wherein the expected deployment location is used to determine, by the exposure function device, a set of MEC execution devices, and a coverage area of the set of the MEC execution devices comprises the geographical area;
receiving, by the MEC management device, the set of the MEC execution devices sent by the exposure function device; and
selecting, by the MEC management device, the target MEC execution device from the set of the MEC execution devices.

4. The method according to claim 3, wherein the selecting, by the MEC management device, the target MEC execution device from the set of the MEC execution devices comprises:
determining, by the MEC management device, a distance between a location of an MEC execution device in the set of the MEC execution devices and the expected deployment location; and
selecting, by the MEC management device, the target MEC execution device from the set of the MEC execution devices based on the distance.

5. The method according to claim 4, wherein the method further comprises:
obtaining, by the MEC management device, status information of the MEC execution device; and
the selecting, by the MEC management device, the target MEC execution device from the set of the MEC execution devices based on the distance comprises:
selecting, by the MEC management device, the target MEC execution device from the set of the MEC execution devices based on the distance and the status information of the MEC execution device.

6. The method according to any one of claims 1 to 5, wherein the service execution information comprises at least one execution program, there is at least one target MEC execution device, and before the sending, by the MEC management device, the service description information and the service execution information to the target MEC execution device, the method further comprises:
formulating, by the MEC management device, a deployment policy, wherein the deployment policy comprises a correspondence between the at least one execution program and the at least one target MEC execution device; and
the sending, by the MEC management device, the service description information and the service execution information to the target MEC execution device comprises:
sending, by the MEC management device, a corresponding execution program to the target MEC execution device based on the correspondence.

7. A service management method, comprising:
receiving, by an exposure function device, service description information and service execution information that are sent by a service server and that are of a to-be-deployed service, wherein the service execution information comprises information for executing the service description information;
sending, by the exposure function device, the service description information and the service execution information to a mobile edge computing MEC management device;
determining, by the exposure function device, a set of MEC execution devices;
sending, by the exposure function device, the set of the MEC execution devices to the MEC management device, wherein the set of the MEC execution devices is used to determine, by the MEC management device, a target MEC execution device from a set of MEC devices, the service execution information is used to obtain, by the target MEC execution device, an execution result of the to-be-deployed service based on the service description information, and the execution result is used to obtain, by the MEC management device, a service result of the to-be-deployed service; and
receiving, by the exposure function device, the service result that is sent by the MEC management device and that is of the to-be-deployed service.

8. The method according to claim 7, wherein the service description information comprises information about a geographical area of the to-be-deployed service, and before the determining, by the exposure function device, a set of MEC execution devices, the method further comprises:
receiving, by the exposure function device, an expected deployment geographical location sent by the MEC management device, wherein the expected deployment geographical location is a location that is determined by the MEC management device based on the service description information and the service execution information and that is to be deployed when the service execution information executes the service; and
the determining, by the exposure function device, a set of MEC execution devices comprises:
determining, by the exposure function device, a set of MEC execution devices that falls within a preset range of the expected deployment geographical location.

9. The method according to claim 7, wherein the service description information comprises information about a geographical area related to the service, and before the sending, by the exposure function device, the service description information to the MEC management device, the method further comprises:
selecting, by the exposure function device, the MEC management device from a plurality of MEC execution devices, wherein a coverage area of the plurality of MEC execution devices comprises the geographical area.

10. The method according to claim 9, wherein the selecting, by the exposure function device, the MEC management device from a plurality of MEC execution devices comprises:
determining, by the exposure function device, the plurality of MEC execution devices based on the geographical area;
obtaining, by the exposure function device, status information of the plurality of MEC execution devices, wherein the status information is used to indicate processing capabilities of the MEC execution devices; and
selecting, by the exposure function device from the plurality of MEC execution devices, an MEC execution device having a strongest processing capability as the MEC management device; or selecting, by the exposure function device from the plurality of MEC execution devices, an MEC execution device of which a processing capability is greater than a threshold as the MEC management device.

11. A management device, comprising:
a first receiving module, configured to receive service description information and service execution information that are sent by an exposure function device and that are of a to-be-deployed service, wherein the service execution information comprises information for executing the service description information;
a determining module, configured to determine a target MEC execution device;
a first sending module, configured to send the service description information and the service execution information that are received by the first receiving module to the target MEC execution device determined by the determining module;
a second receiving module, configured to receive an execution result that is sent by the target MEC execution device and that is of the service execution information, wherein the execution result is obtained by the target MEC execution device based on the service description information and the service execution information;
an obtaining module, configured to obtain a service result of the to-be-deployed service based on the execution result received by the second receiving module; and
a second sending module, configured to send the service result obtained by the obtaining module to the exposure function device.

12. The management device according to claim 11, wherein the description information comprises information about a geographical area of the to-be-deployed service; and
the determining module is further configured to determine the target MEC execution device based on a feature of the service execution information and the geographical area.

13. The management device according to claim 12, wherein the determining module further comprises a determining unit, a sending unit, a receiving unit, and a selection unit;
the determining unit is further configured to determine an expected deployment location of the execution information based on the feature of the execution information;
the sending unit is configured to send the expected deployment location determined by the determining unit to the exposure function device, wherein the expected deployment location is used to determine, by the exposure function device, a set of MEC execution devices, and a coverage area of the set of the MEC execution devices comprises the geographical area;
the receiving unit is configured to receive the set of the MEC execution devices sent by the exposure function device; and
the selection unit is configured to select the target MEC execution device from the set of the MEC execution devices received by the receiving unit.

14. The management device according to claim 13, wherein
the selection unit is further configured to: determine a distance between a location of an MEC execution device in the set of the MEC execution devices and the expected deployment location, and select the target MEC execution device from the set of the MEC execution devices based on the distance.

15. The management device according to claim 14, further comprising an obtaining unit, wherein
the obtaining unit is configured to obtain status information of the MEC execution device; and
the selection unit is further configured to select the target MEC execution device from the set of the MEC execution devices based on the distance and the status information of the MEC execution device.

16. The management device according to any one of claims 11 to 15, wherein the service execution information comprises at least one execution program, there is at least one target MEC execution device, and the management device further comprises a policy formulating module;
the policy formulating module is configured to formulate a deployment policy, wherein the deployment policy comprises a correspondence between the at least one execution program and the at least one target MEC execution device that is determined by the determining module; and
the first sending module is further configured to send a corresponding execution program to the target MEC execution device based on the correspondence determined by the policy formulating module.

17. An exposure function device, comprising:
a first receiving module, configured to receive service description information and service execution information that are sent by a service server and that are of a to-be-deployed service, wherein the service execution information comprises information for executing the service description information;
a first sending module, configured to send the service description information and the service execution information that are received by the first receiving module to a mobile edge computing MEC management device;
a determining module, configured to determine a set of MEC execution devices;
a second sending module, configured to send the set of the MEC execution devices determined by the determining module to the MEC management device, wherein the set of the MEC execution devices is used to determine, by the MEC management device, a target MEC execution device from a set of MEC devices, the service execution information is used to obtain, by the target MEC execution device, an execution result of the to-be-deployed service based on the service description information, and the execution result is used to obtain, by the MEC management device, a service result of the to-be-deployed service; and
a second receiving module, configured to receive the service result that is sent by the MEC management device and that is of the to-be-deployed service.

18. The exposure function device according to claim 17, wherein the service description information comprises information about a geographical area of the to-be-deployed service, and the exposure function device further comprises a third receiving module;
the third receiving module is configured to receive an expected deployment geographical location sent by the MEC management device, wherein the expected deployment geographical location is a location that is determined by the MEC management device based on the service description information and the service execution information and that is to be deployed when the service execution information executes the service; and
the determining module is further configured to determine a set of MEC execution devices that falls within a preset range of the expected deployment geographical location received by the third receiving module.

19. The exposure function device according to claim 17, wherein the service description information comprises information about a geographical area related to the service, and the exposure function device further comprises a selection module; and
the selection module is configured to select the MEC management device from a plurality of MEC execution devices, wherein a coverage area of the plurality of MEC execution devices comprises the geographical area received by the first receiving module.

20. The exposure function device according to claim 19, wherein
the selection module is further configured to: determine the plurality of MEC execution devices based on the geographical area; obtain status information of the plurality of MEC execution devices, wherein the status information is used to indicate processing capabilities of the MEC execution devices; and select, from the plurality of MEC execution devices, an MEC execution device having a strongest processing capability as the MEC management device; or select, by the exposure function device from the plurality of MEC execution devices, an MEC execution device of which a processing capability is greater than a threshold as the MEC management device.

21. A management device, comprising:
a memory, configured to store computer executable program code;
a network interface; and
a processor, coupled to the memory and the network interface, wherein
the program code comprises an instruction, and when executed by the processor, the instruction enables the management device to perform the method according to any one of claims 1 to 6.

22. A computer storage medium, configured to store a computer software instruction used by a management device, and comprising a program designed for performing the method according to any one of claims 1 to 6.

23. An exposure function device, comprising:
a memory, configured to store computer executable program code;
a network interface; and
a processor, coupled to the memory and the network interface, wherein
the program code comprises an instruction, and when executed by the processor, the instruction enables the exposure function device to perform the method according to any one of claims 7 to 10.

24. A computer storage medium, configured to store a computer software instruction used by an exposure function device, and comprising a program designed for performing the method according to any one of claims 7 to 10.
